# EUROPÄISCHE PATENTSCHRIFT

(11) **EP 2 653 335 B1**
(45) Veröffentlichungstag und Bekanntmachung des Hinweises auf die Patenterteilung: **01.04.2020**
(21) Anmeldenummer: 13163754.8
(22) Anmeldetag: 15.04.2013
(51) Int. Cl.: B60K 37/06, B60K 35/00

(54) **Verfahren und Vorrichtung zur Anzeige einer Hand eines Bedieners eines Bedienelements eines Fahrzeugs**
Method and apparatus for displaying a hand of an operator of an operating element of a vehicle
Procédé et dispositif d'affichage d'une main d'un utilisateur d'un élément de commande d'un véhicule

(30) Priorität: 17.04.2012 DE 102012206247
(43) Veröffentlichungstag der Anmeldung: 23.10.2013
(73) Patentinhaber: Ford Global Technologies, LLC, Dearborn, MI 48126 (US)
(72) Erfinder: Spahl, Robert, 51109 Köln (DE); Gerhardt, Torsten, London, Greater London N22 7UL (GB)
(74) Vertreter: Dörfler, Thomas

(56) Entgegenhaltungen:
- EP-A1- 1 811 360
- DE-A1-102008 000 192
- DE-A1-102009 057 739

## Beschreibung

Die Erfindung betrifft ein Verfahren und eine Vorrichtung zur Anzeige einer Hand eines Bedieners eines Bedienelements eines Fahrzeugs auf einer Anzeigeeinrichtung des Fahrzeugs.

Bedienelemente von Fahrzeugen müssen innerhalb der Reichweite des Fahrers angeordnet sein, insbesondere müssen mit der Hand bedienbare Bedienelemente vom Fahrer ohne weiteres mit einer Hand erreichbar sei. Andererseits sollen Anzeigeeinrichtungen möglichst nahe an einer zur vorausliegenden Straßenszene gerichteten Blickrichtung des Fahrers angeordnet sein, so dass die Zeit, während derer der Blick des Fahrers zur Wahrnehmung der Anzeige der Anzeigeeinrichtung nicht auf die Straßenszene gerichtet ist, möglichst kurz ist. Ferner sollen Anzeigeeinrichtungen nicht zu dicht am Fahrer angeordnet sein, um die Zeit, die die Augen des Fahrers zum Fokussieren aus dem Unendlichen bzw. von der Straßenszene auf die Anzeigeeinrichtung benötigen, ebenfalls möglichst gering ist.

Diese Anforderungen können insbesondere dann zu einem Konflikt führen, wenn das Bedienelement als Bedienfläche ausgebildet ist, über die unterschiedliche Funktionen bedient werden können, etwa als berührungsempfindliche Eingabefläche in Form eines Tastfelds (Touchpad) oder eines berührungsempfindlichen Bildschirms (Touchscreen). Eine derartige Bedienfläche ist in der Regel im unteren Bereich des Armaturenbretts oder in einer Mittelkonsole angeordnet, um vom Fahrer mit einer Hand leicht erreichbar zu sein. Zur Bedienung einer solchen Bedienfläche bzw. eines Touchscreens ist jedoch eine visuelle Anzeige notwendig, um das jeweils dargestellte Bedienmenü mit den dazugehörigen virtuellen Schaltflächen zu erkennen und die notwendigen Bedienoperationen vorzunehmen, beispielsweise um dargestellte grafische Elemente durch leichte Berührung zu verschieben oder Schaltflächen durch einfaches oder doppeltes Drücken zu betätigen. Deshalb wird zur Menüanzeige und zur Überwachung der Bedienoperationen häufig eine Überwachungseinrichtung, etwa ein Bildschirm, in einer höheren und vorwärts gerichteten Position vorgesehen, während die Bedienfläche im unteren Bereich des Armaturenbretts oder in einer Mittelkonsole angeordnet ist. Bei einer derartigen getrennten Anordnung der Bedienfläche und der Anzeigeeinrichtung ist es wünschenswert, dass die durchgeführten Bedienhandlungen und die Anzeige auf der Anzeigeeinrichtung in einer möglichst einfachen und intuitiv verständlichen Weise miteinander verknüpft sind.

Es ist deshalb vorgeschlagen worden, dass auf der Anzeigeeinrichtung die Hand eines Bedieners des Bedienelements in einer der tatsächlichen Lage der Hand relativ zur Bedienfläche entsprechenden Weise angezeigt wird. Aus der DE 10 2005 056 458 A1 ist es bekannt, durch eine Sensoreinheit eine ein Bedienelement betätigende Hand einer Bedienperson zu erfassen, durch Bilderkennung Positionsdaten der erfassten Hand zu ermitteln und an eine optische Anzeigeeinheit zur Darstellung der erfassten betätigenden Hand zu übertragen.

Gemäß der DE 10 2009 057 739 A1 werden von einer Kamera ein oder mehrere Finger eines Benutzers, mit denen ein Bedienelement betätigt wird, erfasst, und ein Videobild der Hand des Benutzers wird mit einem Bedienscreen überlagert. Hierdurch wird dem Benutzer eine Bedienung ähnlich einer direkt visuell beobachteten Bedienung eines Touchscreen ermöglicht. Aufgrund der Notwendigkeit einer Kamera und ggf. einer Bildanalyse zur Erfassung der Hand bzw. der Finger in unterschiedlichen Situationen und bei unterschiedlichen Beleuchtungsverhältnissen ist dies jedoch mit einem relativ hohen Aufwand und entsprechenden Kosten verbunden.

In der DE 10 2008 000 192 A1 ist eine Bedienungsvorrichtung offenbart, die einen Bedienungsabschnitt umfasst, in dem ein Bedienungsschalter angeordnet ist, einen Anzeigeabschnitt, der es ermöglicht, dass eine stereoskopische Sicht mit bloßem Auge betrachtet wird, einen Bildaufnahmemechanismus, der Bilder einer Hand eines Benutzers aufnimmt, die den Bedienungsabschnitt bedient, und eine Anzeigebilderzeugungsvorrichtung zur Erzeugung eines stereoskopischen Bilds der Hand auf der Grundlage von Parallaxenbildern, die von dem Bildaufnahmemechanismus erhalten werden. Ein Bedienungsmenübild, das eine Position des Bedienungsschalters in dem Bedienungsabschnitt zeigt, und ein stereoskopisches Bild der Hand werden zusammengesetzt, und das zusammengesetzte Bild wird in der Anzeige angezeigt.

Gemäß EP 1 811 360 A1 wird bei einer Eingabevorrichtung aus Kontaktpositionsdaten, die eine Kontaktfläche einer Hand eines Benutzers bei dem Berühren eines Touch Pad zur Auswahl eines Teils einer graphischen Benutzeroberfläche angeben, ein Bild eines Modells einer Hand generiert und auf einer Anzeige dargestellt.

Es ist Aufgabe der vorliegenden Erfindung, ein Verfahren und eine Vorrichtung zur Anzeige einer Hand eines Bedieners eines Bedienfläche eines Fahrzeugs auf einer Anzeigeeinrichtung des Fahrzeugs anzugeben, wobei die oben genannten Nachteile vermieden werden.

Diese Aufgabe wird durch eine Vorrichtung sowie durch ein Verfahren wie in den unabhängigen Ansprüchen angegeben gelöst.

Bei einem erfindungsgemäßen Verfahren zur Anzeige einer Hand einer Person, die mit dieser Hand ein Bedienelement eines Fahrzeugs bedient, wobei das Bedienelement eine berührungsempfindliche Bedienfläche umfasst oder als solche ausgebildet ist, wird eine Berührung der Bedienfläche mit der Hand des Bedieners detektiert und eine Position eines Berührpunkts der Hand mit der Bedienfläche ermittelt. Dabei erfolgt die Berührung beispielsweise mit einem Finger der Hand, insbesondere mit der Spitze des Fingers, kann aber auch etwa mit dem Handballen und/oder einem oder mehreren Fingern gleichzeitig erfolgen. Der Berührpunkt kann insbesondere als Flächenschwerpunkt einer ermittelten Berührfläche definiert sein, die etwa die Größe einer Fingerspitze hat. Die Berührung wird in an sich bekannter Weise detektiert, etwa durch eine kapazitive und/oder resistive Sensorik eines Touchpads oder eines Touchscreens, als welche die Bedienfläche ausgebildet sein kann. Eine kapazitive Detektion der Berührung hat den Vorteil, dass eine Mehrzahl von Berührungspunkten detektiert werden können, während durch eine resistive Berührungserkennung die Berührungskraft erkannt werden kann. In vorteilhafter Weise kann es daher vorgesehen sein, dass sowohl eine kapazitive als auch eine resistive Berührungserkennung stattfindet.

Gemäß dem erfindungsgemäßen Verfahren wird der Bediener identifiziert, d.h. es wird festgestellt, ob diejenige Person, die die Bedienfläche des Bedienelements mit einer Hand berührt, der Fahrer, der Beifahrer oder ein weiterer Passagier des Fahrzeugs ist. Hieraus kann auf die Stellung der Hand beim Berühren der Bedienfläche geschlossen werden. Ferner ergibt sich daraus in der Regel, ob der Bediener mit der rechten oder mit der linken Hand die Bedienfläche berührt. So wird beispielsweise bei einem Fahrzeug mit Linkslenkung der Fahrer mit der rechten Hand eine in der Mittelkonsole des Fahrzeugs angeordnete Bedienfläche berühren, während der Beifahrer hierfür die linke Hand verwenden wird. In ähnlicher Weise kann, wenn festgestellt wird, dass der Bediener auf dem hinteren rechten Sitz sitzt, angenommen werden, dass dieser die linke Hand zur Berührung der Bedienfläche benutzt. Durch die Identifikation des Bedieners wird somit eine Orientierung der das Bedienelement bedienenden Hand relativ zur Bedienfläche ermittelt, wobei der Begriff "Orientierung" im Rahmen der vorliegenden Erfindung sowohl eine Winkelstellung der Hand relativ zur Bedienfläche als auch die Unterscheidung zwischen der rechten und der linken Hand unter der Annahme, dass die Handfläche zur Bedienfläche gerichtet ist, umfasst.

Aufgrund der derart ermittelten Orientierung der Hand wird erfindungsgemäß ein Bild einer Hand generiert und auf einer Anzeigeeinrichtung mit der ermittelten Orientierung angezeigt. Insbesondere wird das Bild einer solchen simulierten oder virtuellen Hand aufgrund von Parametern, die die Winkelstellung der Hand relativ zur Bedienfläche beschreiben, generiert, sowie unter Berücksichtigung der Kenntnis, ob es die rechte oder die linke Hand des Bedieners ist. Weiterhin wird das Bild der Hand des Bedieners auf der Anzeigeeinrichtung derart dargestellt, dass eine Spitze eines Fingers der Hand der ermittelten Position des Berührpunkts entspricht. Dabei kann vorbestimmbar sein, die Spitze welchen Fingers der Hand mit dem Berührpunkt übereinstimmt. Dies ist im Allgemeinen der Zeigefinger, kann aber auch beispielsweise der Mittelfinger sein.

Die Anzeigeeinrichtung, die insbesondere ein Bildschirm oder eine Projektionseinrichtung sein kann, ist vorzugsweise nahe der Blickrichtung des Fahrers zur Straße angeordnet, so dass der Fahrer seinen Blick zum Erfassen der Anzeige der Anzeigeeinrichtung nur für kurze Zeit von der vorausliegenden Straßenszene abwenden muss. Es kann aber auch vorgesehen sein, dass die Anzeigeeinrichtung zur Wahrnehmung durch den Beifahrer oder andere Passagiere des Fahrzeugs angeordnet ist oder zur gleichzeitigen Wahrnehmung durch mehrere Personen. Ferner können in vorteilhafter Weise mehrere Bildschirme der Anzeigeeinrichtung zum Anzeigen für den Fahrer, den Beifahrer und/oder andere Passagiere vorgesehen sein.

Dadurch, dass die Person, die mit einer Hand die Bedienfläche des Bedienelements berührt, identifiziert wird, wird es auf besonders einfache Weise ermöglicht, die Orientierung der Hand, mit der das Bedienelement bedient wird, relativ zur Bedienfläche zu ermitteln und ein Bild einer virtuellen Hand in der ermittelten Orientierung auf der Anzeigeeinrichtung anzuzeigen. Insbesondere wird hierdurch eine für die Bedienung des Bedienelements ausreichend genaue Darstellung einer simulierten bzw. virtuellen Hand auf der Anzeigeeinrichtung ermöglicht, ohne dass eine aufwändige Bilderfassung und Bildauswertung notwendig wären. Dadurch, dass die Hand des Bedieners derart dargestellt wird, dass eine Fingerspitze mit einem Berührpunkt auf der Bedienfläche übereinstimmt, kann ferner ein visuelles Bild erzeugt werden, das weitgehend der direkten Beobachtung der Eingabe auf der Bedienfläche entspricht. So kann beispielsweise auf einem Bildschirm der Anzeigeeinrichtung ein Bedienmenü angezeigt werden, aus dem Menüpunkte durch Berührung bzw. Ausübung eines Druckes in dem angezeigten Berührpunkt ausgewählt werden können. Das auf dem Bildschirm der Anzeigeeinrichtung angezeigte Bild mit der simulierten bzw. virtuellen Hand des Bedieners kann somit dem visuellen Eindruck beim Bedienen etwa eines Touchscreen entsprechen. Hierdurch wird eine besonders einfache und intuitive Bedienung des Bedienelements ermöglicht. Dabei kann beispielsweise durch eine transparente oder halb-transparente Darstellung der Hand das angezeigte Bedienmenü auch "unterhalb" der Hand erkennbar bleiben.

Gemäß einer bevorzugten Ausführungsform der Erfindung wird der Bediener aufgrund eines Signals von mindestens einem Sitzbelegungssensor identifiziert. Derartige Sitzbelegungssensoren sind in vielen Fahrzeugen vorhanden, etwa um ein Warnsignal auszulösen, falls ein Sitz belegt ist, jedoch der zugehörige Sicherheitsgurt nicht angelegt ist. Ist beispielsweise der Beifahrersitz nicht belegt und sind auch die hinteren Sitzplätze in einem Fahrzeug nicht belegt, so kann darauf geschlossen werden, dass es der Fahrer ist, der mit einer Hand die Bedienfläche des Bedienelements berührt. Ist andererseits beispielsweise nur der hintere rechte Sitz belegt, so kann angenommen werden, dass der auf diesem Sitz sitzende Passagier der Bediener ist. Auf diese Weise kann in einer Mehrzahl von Bedienungssituationen der Bediener eindeutig identifiziert werden.

Gemäß einer weiteren bevorzugten Ausführungsform der Erfindung wird die elektrische Leitfähigkeit des menschlichen Körpers zur Identifikation des Bedieners ausgenutzt. Dabei wird ausgenutzt, dass bei Berührung der Bedienfläche ein Stromkreis über den Sitz des Bedieners durch den Körper des Bedieners über die Hand zur Bedienfläche geschlossen wird. Daraus, ob über den Fahrersitz oder über den Beifahrersitz oder über einen anderen Sitz innerhalb des Fahrzeugs ein elektrischer Kontakt mit der Bedienfläche besteht, folgt, ob der Fahrer, der Beifahrer oder ein anderer Passagier die Bedienfläche berührt. Ferner kann über den Stromkreis ein Identifizierungscode übertragen werden, der je nach Sitz unterschiedlich ist. Hierdurch kann auf besonders sichere Weise der Bediener identifiziert werden.

Gemäß einer weiteren bevorzugten Ausführungsform der Erfindung ist die Bedienfläche in einer Mittelkonsole des Fahrzeugs angeordnet, so dass diese sowohl von dem Fahrer als auch von dem Beifahrer sowie ggf. von weiteren Passagieren des Fahrzeugs erreichbar ist. Seitlich der Bedienfläche ist mindestens ein Sensor angeordnet zur Detektion einer Hand oder eines Arms einer Person, die von ihrem Sitz aus die Bedienfläche berührt. Der mindestens eine Sensor ist insbesondere als Präsenzsensor ausgebildet und weist einen nach oben gerichteten Detektionsbereich auf, in dem das Vorhandensein eines Körperteils eines Bedieners detektierbar ist. Sind beispielsweise derartige Sensoren auf einer in Fahrtrichtung des Fahrzeugs gesehen linken Seite der Bedienfläche, einer rechten Seite und einer hinteren Seite der Bedienfläche angeordnet, so kann auf diese Weise erkannt werden, aus welcher Richtung ein Bediener auf die Bedienfläche greift. Auch hierdurch kann auf einfache Weise festgestellt werden, ob der Fahrer, der Beifahrer oder ein anderer Passagier das Bedienelement bedient.

Erfindungsgemäß wird eine Sitzposition des identifizierten Bedieners erfasst, wodurch Rückschlüsse beispielsweise auf die Körpergröße des Bedieners und die Armhaltung, insbesondere die Winkelstellung des betreffenden Arms und der Hand des Bedieners beim Betätigen des Bedienelements, möglich sind. Ferner lässt sich aus der aus der Sitzposition ermittelten Körpergröße auf die Größe der Hand des Bedieners schließen. Hierdurch wird eine besonders genaue Darstellung der virtuellen Hand des Bedieners auf der Anzeigeeinrichtung ermöglicht.

Vorzugsweise wird die Sitzposition des Bedieners durch Erfassung der Stellung mindestens eines Verstellelements des Sitzes des identifizierten Bedieners erfasst. So ergibt sich beispielsweise aus der gewählten Position des Sitzes in Längsrichtung des Fahrzeugs die Sitzposition des Bedieners. Diese hängt insbesondere mit der Körpergröße des Bedieners zusammen. Ferner können die Stellungen weiterer Verstellelemente des Sitzes des identifizierten Bedieners, etwa der Sitzlehnenwinkel, der Sitzkissenwinkel und/oder die Sitzhöhe, ausgewertet werden, um die Sitzposition des Bedieners noch genauer zu erfassen. Auch Verstellpositionen der Spiegel und/oder des Lenkrades können zur Bestimmung der Sitzposition des Bedieners, falls dieser der Fahrer ist, ausgewertet werden. Zur Erfassung der Stellungen der Verstellelemente können entsprechende Wegsensoren vorgesehen sein. Bei Fahrzeugen mit personenabhängig vorbestimmbaren Sitzeinstellungen können die voreingestellten Sitzeinstellungsparameter direkt zur Ermittlung der Sitzposition des Bedieners ausgewertet werden. Durch Erfassung der Sitzposition mit Hilfe der Stellung des mindestens einen Verstellelements ist auf einfache Weise eine besonders genaue Ermittlung der Sitzposition des Bedieners möglich.

Zur Ermittlung der Orientierung der Hand des Bedieners wird vorzugsweise ein vereinfachtes Modell des Bedieners verwendet. Durch dieses Modell wird eine Beziehung zwischen der ermittelten Sitzposition und Parametern vermittelt, die die Orientierung der Hand des Bedieners, die die Bedienfläche des Bedienelements berührt, angeben, wie etwa der Winkelstellung der Hand relativ zur Bedienfläche. Alternativ kann mit Hilfe eines vorgebbaren und gespeicherten Kennfelds bzw. einer ggf. mehrdimensionalen Tabelle (look-up table) aus der ermittelten Sitzposition des Bedieners auf die Parameter, die die Orientierung der Hand bestimmen, geschlossen werden. So gestattet insbesondere die Position des Sitzes des Bedieners in Längsrichtung des Fahrzeugs einen Rückschluss auf die Körpergröße des Bedieners, wodurch wiederum ein Armwinkel und eine Winkelstellung der Hand berechenbar sind. Hierdurch können auf besonders einfache Weise Parameter ermittelt werden, die eine Darstellung einer virtuellen Hand des Bedieners auf der Anzeigeeinrichtung ermöglichen.

Vorzugsweise werden aus der Sitzposition des identifizierten Bedieners ein Handwinkel und/oder eine Handgröße des Bedieners ermittelt. Die Handgröße wird insbesondere aus der mit Hilfe der Position des Sitzes des Bedieners in Längsrichtung des Fahrzeugs ermittelbaren Körpergröße des Bedieners bestimmt. Auch der Handwinkel hängt in erster Linie mit der Längsposition des Sitzes des Bedieners zusammen, wird in geringerem Maße aber auch von weiteren Verstellparametern der Sitzposition, etwa der Höhe und dem Sitzlehnenwinkel, beeinflusst. Durch die Kenntnis des Handwinkels und/oder der Handgröße ist eine besonders genaue Darstellung einer der Hand des Bedieners entsprechenden virtuellen Hand auf der Anzeigeeinrichtung möglich.

Gemäß einer besonders bevorzugten Ausführungsform der Erfindung wird die Position des Berührpunkts der Hand auf der Bedienfläche auf der Anzeigeeinrichtung dargestellt. Der Berührpunkt wird somit zusammen mit der virtuellen Hand des Bedieners auf der Anzeigeeinrichtung dargestellt, wobei eine Spitze eines Fingers der Hand mit dem angezeigten Berührpunkt übereinstimmt. Das auf dem Bildschirm der Anzeigeeinrichtung angezeigte Bild mit der simulierten bzw. virtuellen Hand des Bedieners kann hierdurch noch besser beispielsweise dem visuellen Eindruck beim Bedienen eines konventionellen Touchscreen entsprechen. Hierdurch wird die Bedienbarkeit des Bedienelements weiter verbessert.

Weiterhin ist es bevorzugt, dass die Position des Berührpunkts der Hand auf der Bedienfläche unter Berücksichtigung der ermittelten Orientierung der Hand ermittelt wird. Hierdurch ist es möglich, dass auch in dem Fall, dass der Bediener die Bedienfläche nicht nur in einem Punkt berührt, sondern beispielsweise mit einer Mehrzahl von Fingern und/oder dem Handballen, ein derartiger Berührpunkt ermittelt werden kann, in dem der Bediener die Bedienfläche mit der Fingerspitze eines vorbestimmbaren Fingers berührt. Ist beispielsweise bei einem Fahrzeug mit Linkslenkung der Fahrer als Bediener identifiziert worden, so kann in Abhängigkeit von dem ermittelten Handwinkel beispielsweise angenommen werden, dass die Spitze des Zeigefingers, mit der in der Regel Eingaben in der Bedienfläche erfolgen, bei einer Mehrzahl von detektierten Berührpunkten dem am weitesten im linken vorderen Bereich angeordneten Berührpunkt entspricht bzw. bei Detektion einer flächigen Berührung, die eine größere Fläche als die einer Fingerspitze umfasst, im linken vorderen Bereich der Berührfläche angeordnet ist. Hierdurch ist auch bei Berührung der Bedienfläche in mehr als einem Punkt, wie sie beispielsweise bei flüchtiger Bedienung oder bei unruhiger Fahrt vorkommen kann, eine sichere Identifizierung der Position der Fingerspitze, mit der der Bediener das Bedienelement üblicherweise bedient, möglich.

Eine erfindungsgemäße Vorrichtung umfasst ein Bedienelement, das eine Bedienfläche umfasst oder als solche ausgebildet ist, wobei die Bedienfläche insbesondere als Touchpad oder Touchscreen ausgebildet ist und in einer Mittelkonsole oder in einem unteren Bereich des Armaturenbretts eines Fahrzeugs angeordnet werden kann. Die Vorrichtung umfasst ferner erste Sensormittel zur Identifikation eines Bedieners des Bedienelements sowie zweite Sensormittel zur Erfassung einer Sitzposition des Bedieners. Derartige erste Sensormittel können beispielsweise Sitzbelegungssensoren, elektrische Kontaktsensoren zur Detektion des Schließens eines Stromkreises über den Sitz und den Bediener zur Bedienfläche, und/oder Präsenzsensoren zur Detektion eines zur Bedienfläche reichenden Arms des Bedieners sein; die Präsenzsensoren können beispielsweise als optische oder kapazitive Sensoren ausgebildet sein. Zweite Sensormittel könnten insbesondere mit einer Sitzverstellung gekoppelte Wegsensoren oder Sensormittel zur Erfassung einer Eingabe zur Sitzverstellung sein, die auch zur Einstellung einer personenabhängig vorbestimmten Sitzposition dienen kann. Weiterhin umfasst die erfindungsgemäße Vorrichtung Speicher- und Prozessormittel, die zur Ermittlung einer Orientierung einer Hand, mit der der Bediener die Bedienfläche des Bedienelements berührt, aufgrund der Signale der Sensormittel und aufgrund eines gespeicherten Modells des Bedieners bzw. einer gespeicherten Tabelle ausgebildet sind. Die Speicher- und Prozessormittel können eine Steuerungseinrichtung bilden bzw. einer solchen zugeordnet sein. Die erfindungsgemäße Vorrichtung umfasst ferner eine Anzeigeeinrichtung, die insbesondere einen Bildschirm umfasst, der nahe einer Blickrichtung des Fahrers im Fahrzeug angeordnet werden kann, vorzugsweise im oberen Bereich des Armaturenbretts. Die Anzeige ist zur Anzeige eines Bilds der Hand in der ermittelten Lage relativ zur Bedienfläche ausgebildet, d.h. in der ermittelten Orientierung und mit einer Position, so dass die Spitze eines vorbestimmbaren Fingers, etwa des Zeigefingers, der Hand mit dem Berührpunkt übereinstimmt. Die erfindungsgemäße Vorrichtung ermöglicht es auf besonders einfache Weise, eine simulierte bzw. virtuelle Hand des Bedieners auf der Anzeigeeinrichtung in Relation zu einem Bedienmenü in einer Weise darzustellen, die der visuellen Beobachtung der Hand des Bedieners auf einem Touchpad oder Touchscreen entspricht. Hierdurch wird die Bedienbarkeit des Bedienelements verbessert.

Vorzugsweise weist die Anzeigeeinrichtung die gleichen Seitenverhältnisse auf wie die Bedienfläche und insbesondere die gleiche Größe. Hierdurch wird die intuitive Bedienbarkeit des Bedienelements weiter verbessert.

Die erfindungsgemäße Vorrichtung ist insbesondere zur Durchführung des oben beschriebenen Verfahrens ausgebildet.

Die Erfindung wird nachfolgend anhand der Zeichnungen beispielhaft näher erläutert. Es zeigen:
- Fig. 1: ein mit einer erfindungsgemäßen Vorrichtung ausgestattetes Cockpit eines Personenkraftwagens sowie ein Prinzipschaltbild einer solchen Vorrichtung;
- Fig. 2: ein vereinfachtes Flussdiagramm eines erfindungsgemäßen Verfahrens;
- Fig. 3: eine vereinfachte Darstellung einer Identifikation eines Bedieners;
- Fig. 4: ein vereinfachtes Flussdiagramm der Bedienung eines Bedienmenüs;
- Fig. 5: die Darstellung eines Berührpunkts und einer simulierten Hand eines Bedieners auf einem Bildschirm.

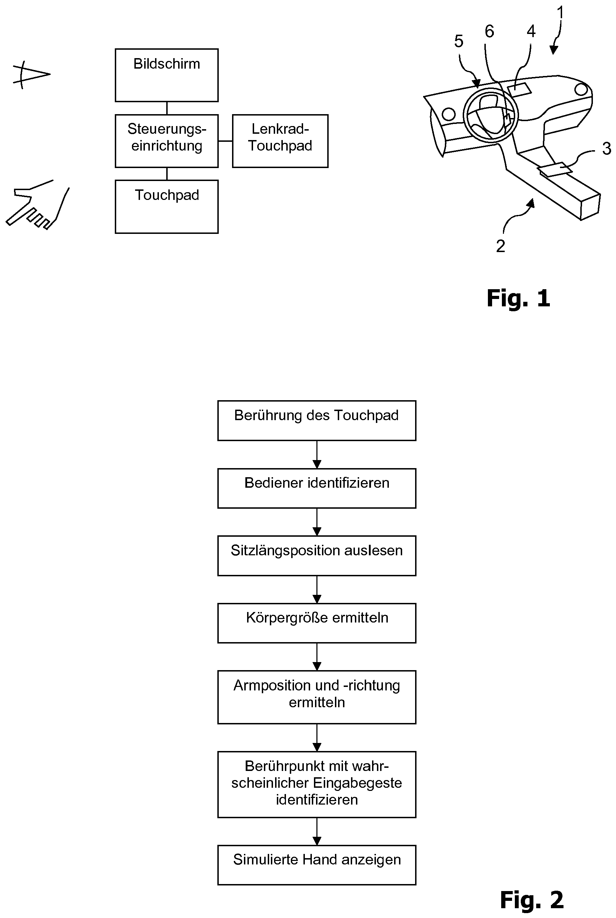

Wie im rechten Teil von Fig. 1 gezeigt, sind an einem Armaturenbrett 1 und an einer Mittelkonsole 2 eines Kraftfahrzeugs, insbesondere eines Personenkraftwagens, eine Mehrzahl von Bedienelementen angeordnet. Gemäß einem Ausführungsbeispiel ist an der Mittelkonsole ein Touchpad 3 derart angeordnet, dass die berührungsempfindliche Oberfläche des Touchpad 3 vom Fahrer bequem mit der rechten Hand berührt werden kann. Ferner ist im oberen Bereich des Armaturenbretts ein Bildschirm 4 platziert, der vom Fahrer mit einer relativ geringen Änderung seiner Blickrichtung aus der zur vorausliegenden Straße gerichteten Blickrichtung wahrgenommen werden kann. Alternativ kann der Bildschirm auch - hier nicht dargestellt - als ein Head-Up-Display ausgeführt sein, d. h. der Inhalt wird in die Windschutzscheibe in Blickrichtung des Fahrers eingespielt.

Das Touchpad 3 kann auch vom Beifahrer bequem erreicht werden, und zwar mit der linken Hand. In der in Fig. 1 gezeigten Anordnung ist der Bildschirm 4 auch vom Beifahrer einsehbar. Ferner ist im Bereich des Lenkrads 5 ein weiteres Touchpad 6 angeordnet, das vom Fahrer betätigbar ist, ohne die Hand vom Lenkrad zu nehmen.

Das Touchpad 3 kann mit einem Finger berührt werden, um beispielsweise innerhalb eines Bedienmenüs bestimmte Menüpunkte auszuwählen und zu aktivieren, etwa zur Bedienung einer Radioanlage des Fahrzeugs. Wie im linken Teil von Fig. 1 symbolisch dargestellt, werden die vom Bediener veranlassten Eingaben und Betätigungsaktionen des Touchpads 3 von einer Steuerungseinrichtung ausgewertet, die den Bildschirm 4 zur Anzeige einer der Hand des Bedieners entsprechenden virtuellen Hand und eines Bedienmenüs ansteuert. Das weitere Touchpad 6 am Lenkrad 5, das ebenfalls zur Steuerung einiger oder aller Funktionen, die mit dem Touchpad 3 bedienbar sind, dienen kann, ist gegenüber dem Touchpad 3 in der Mittelkonsole priorisiert. Unabhängig von der Betätigung des Touchpad 3 in der Mittelkonsole 2 kann der Fahrer somit die betreffenden Bedienfunktionen auf dem Touchpad 6 im Bereich des Lenkrads 5 steuern. Im Folgenden wird bei der Beschreibung des erfindungsgemäßen Verfahrens davon ausgegangen, dass keine Betätigung des weiteren Touchpads 6 erfolgt.

Während das Touchpad 3 bequem mit der rechten Hand des Fahrers erreichbar ist, ist es für den Fahrer nicht ohne weiteres einfach erkennbar, auf welcher Position des Touchpads 3 eine Eingabe vorgenommen wird. Hierfür müsste der Fahrer seine Blickrichtung stark ändern, um das Touchpad 3 und seine zur Bedienung des Touchpads 3 benutzte Hand sehen zu können; ferner wäre eine Fokussierung auf eine relativ geringe Distanz notwendig. Um die Bedienung des Touchpad 3 zu erleichtern, wird daher das Bedienmenü auf dem Bildschirm 4 angezeigt und ebenso eine simulierte Hand des Bedieners in einer Position und Orientierung, die der der Hand relativ zum Touchpad 3 entspricht, zusammen mit einem Berührpunkt, in dem durch Druck mit dem Finger eine Eingabe erfolgen kann.

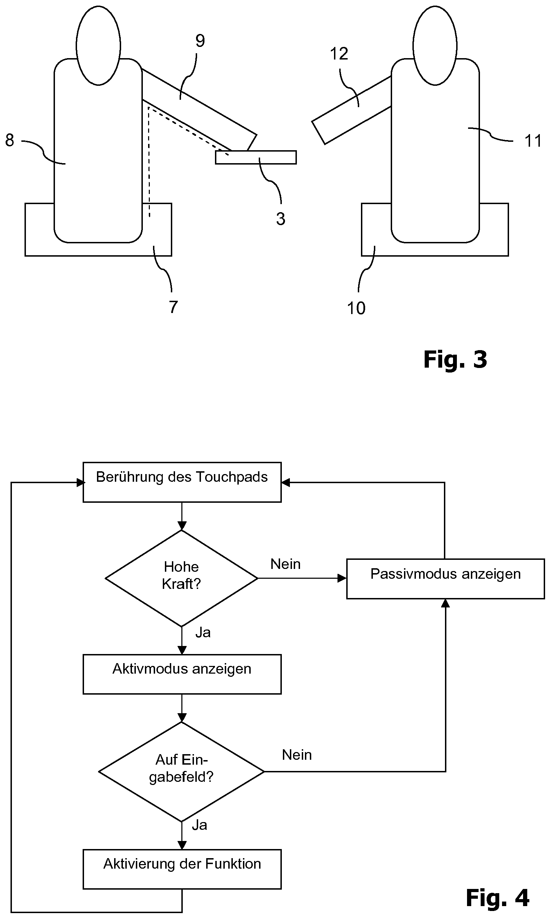

Hierfür wird, wie in Fig. 2 schematisch dargestellt, gemäß einem Ausführungsbeispiel der Erfindung nach Detektion einer Berührung des Touchpads 3 (s. Fig. 1) zunächst festgestellt, welcher der möglichen Insassen des Fahrzeugs das Touchpad bedient. Eine derartige Situation ist schematisch in Fig. 3 dargestellt. Gemäß Fig. 3 wird über einen Sitz 7 und den Körper 8 sowie den Arm 9 und die nicht im Einzelnen dargestellte Hand des Fahrers über die Haut ein elektrischer Stromkreis zum Touchpad 3 geschlossen, wodurch festgestellt werden kann, ob der Fahrer das Touchpad 3 berührt. Der für den Fahrer unmerklich schwache Stromfluss vom Sitz 7 zum Touchpad 3 ist in Fig. 3 durch die gestrichelte Linie angedeutet. In analoger Weise kann durch einen entsprechenden Stromkreis über den Sitz 10, den Körper 11 und den Arm 12 des Beifahrers festgestellt werden, ob dieser das Touchpad 3 berührt. In der in Fig. 3 dargestellten Situation berührt der Beifahrer das Touchpad 3 nicht, so dass der entsprechende Stromkreis nicht geschlossen ist. Zusätzlich kann zur besonders sicheren Identifikation des Bedieners über den jeweiligen Stromkreis ein für den Bediener charakteristischer Code übermittelt werden.

Ist nun festgestellt, welcher der Insassen des Fahrzeugs das Touchpad 3 bedient, so wird gemäß dem in Fig. 2 dargestellten Ausführungsbeispiel des erfindungsgemäßen Verfahrens die Position der Sitzlängsverstellung des Sitzes des identifizierten Bedieners, der in der in Fig. 3 gezeigten Situation der Fahrer ist, ausgelesen. Hieraus wird durch ein Modell die wahrscheinliche Körpergröße des Bedieners ermittelt sowie die wahrscheinliche Orientierung des Arms, mit dem der Bediener das Touchpad bedient; diese Parameter können auch beispielsweise aus einer Tabelle abgelesen werden. Die entsprechenden Rechenoperationen erfolgen insbesondere in Echtzeit. Weiterhin wird eine vorbestimmte wahrscheinliche Bedienungsgeste benutzt, um die Position der Hand, mit der der Bediener das Touchpad 3 bedient, relativ zu einem Berührpunkt, der aus dem Signal des Touchpad bestimmt worden ist, zu ermitteln. Ist beispielsweise zuvor festgelegt worden, dass der Fahrer des Fahrzeugs die Eingaben mit dem Zeigefinger der rechten Hand vornimmt, so kann die Fingerspitze des Zeigefingers der rechten Hand mit dem detektierten Berührpunkt auf dem Touchpad 3 identifiziert werden. Zusammen mit der Größe der Hand, die aus der ermittelten Körpergröße abgeschätzt wird, und der zuvor ermittelten Stellung des Arms, mit dem der Bediener das Touchpad 3 bedient, sind somit alle Parameter bekannt, um die Hand des Bedieners relativ zum Berührpunkt auf dem Touchpad großen- und lagerichtig anzuzeigen. Eine derartige Anzeige einer simulierten bzw. virtuellen Hand erfolgt auf dem Bildschirm 4 (siehe Fig. 1), so dass der Bediener stets die von ihm vorgenommenen bzw. vorzunehmenden Aktionen im Bedienmenü auf dem Touchpad 3 verfolgen kann. Dabei entspricht die Darstellung einer solchen, die der Bediener bei Bedienung eines unmittelbar von ihm betrachteten Touchscreen haben würde. Zusätzlich kann durch eine transparente oder halb-transparente Darstellung der simulierten bzw. virtuellen Hand eine verbesserte Sichtbarkeit des darunter liegenden Bedienmenüs erreicht werden.

In Fig. 4 ist schematisch der Ablauf einer Bedienung des Touchpad 3 dargestellt. Wenn eine Berührung des Touchpad 3 detektiert wird, wird zunächst festgestellt, ob diese mit einer Kraft unterhalb oder oberhalb eines Schwellwerts erfolgt. Bei geringerer Kraft wird der Berührpunkt in einem "passiven" Modus, bei höherer Kraft in einem "Eingabe"-Modus dargestellt. Im letzteren Fall wird zusätzlich geprüft, ob die Position des Berührpunkts mit einem zum betreffenden Zeitpunkt aktiven Eingabefeld übereinstimmt, und, falls dies der Fall ist, die dem Eingabefeld entsprechende Aktion durchgeführt, etwa entsprechend der Bedienung eines konventionellen Touchscreen. Durch einen kurzen Druck mit der höheren Kraft werden somit beispielsweise Menüs oder Menüpunkte selektiert, durch einen langen Druck werden Untermenüs aufgerufen usw.

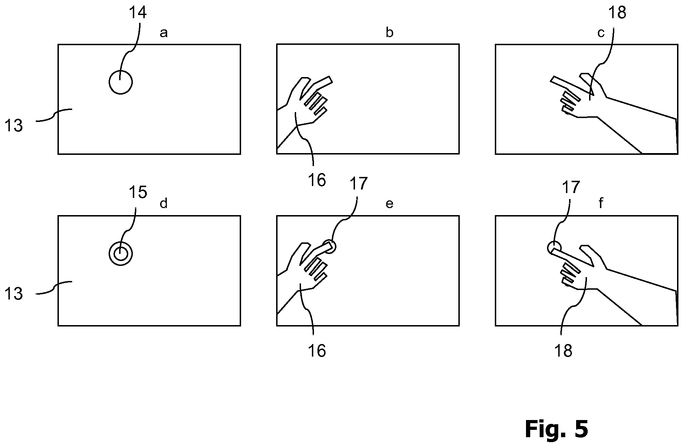

Eine mögliche Darstellungsweise auf dem Bildschirm 4 ist in Fig. 5a bis 5f dargestellt. Dabei entsprechen die Abbildungen in der oberen Reihe (Fig. 5a bis 5c) dem passiven Modus, die Abbildungen der Fig. 5d bis 5f dem Eingabe-Modus. Die Darstellung eines konventionellen Touchscreen, bei dessen Bedienung der Bediener seine Hand im Blickfeld hat, ist in den linken Abbildungen (Fig. 5a und 5d) gezeigt. Dabei kann der Berührpunkt, d.h. eine Fläche, in deren Mittelpunkt der Berührpunkt liegt bzw. die den Berührpunkt darstellt, unterschiedlich angezeigt werden, je nachdem, ob es sich um den passiven oder den Eingabemodus handelt; in Figur 5a ist der Berührpunkt 14 im passiven Modus und in Fig. 5d der Berührpunkt 15 im Eingabemodus gezeigt. Im passiven Modus können beispielsweise Menüpunkte durch Bewegen des Fingers verschoben werden, während im Eingabemodus Menüpunkte aktiviert werden können. Der angezeigte Berührpunkt 14, 15 auf dem Bildschirm 4 entspricht dem tatsächlichen Berührpunkt auf dem Touchpad 3. Das Bedienmenü ist in den Figuren 5a bis 5f der Übersichtlichkeit halber nicht dargestellt.

Da im vorliegenden Fall der Bediener, insbesondere, wenn es sich um den Fahrer handelt, die Bedienfläche nicht oder nicht ständig im Blickfeld hat, wird eine virtuelle Hand 16, 18 des Bedieners zusammen mit dem zu bedienenden Menü auf der Anzeigeeinrichtung (Bildschirm 4, siehe Fig. 1) dargestellt. Eine solche Darstellung, wenn der Fahrer als Bediener identifiziert worden ist, ist in den Figuren 5b und 5e gezeigt. Die Hand des Bedieners wird symbolisch aufgrund der wie vorstehend beschrieben ermittelten Parameter als virtuelle Hand 16, 18 dargestellt, wobei die Spitze des Zeigefingers an der Position des ermittelten Berührungspunkts angezeigt wird. Gemäß Fig. 5b ist es daher nicht notwendig, den Berührpunkt besonders zu markieren. In Fig. 5e ist gezeigt, dass der Berührpunkt 17 im Eingabemodus markiert ist. Die Fig. 5b und 5e zeigen die virtuelle Hand 16 des Fahrers, d.h. bei einem Fahrzeug mit Linkslenkung, die rechte Hand, wobei die Eingaben vom Fahrer mit dem Zeigefinger vorgenommen werden. Gemäß Fig. 5c und 5f wird als virtuelle Hand 18 die Hand des Beifahrers dargestellt, wenn dieser als Bediener identifiziert worden ist. Zusammen mit der virtuellen Hand 16, 18 kann auch ein Teil des Arms des Bedieners dargestellt werden, wie in den Figuren 5b, 5c, 5e und 5f angedeutet ist. Die virtuelle Hand 16, 18 sowie der Arm des Bedieners können transparent oder teil-transparent dargestellt werden.

## Patentansprüche

1. Verfahren zur Anzeige einer Hand eines Bedieners eines Bedienelements eines Fahrzeugs auf einer Anzeigeeinrichtung des Fahrzeugs, wobei eine Berührung einer Bedienfläche des Bedienelements mit der Hand des Bedieners detektiert und eine Position eines Berührpunkts ermittelt wird, der Bediener identifiziert wird, eine Orientierung der Hand ermittelt wird und ein Bild einer entsprechend orientierten virtuellen Hand (16, 18) auf der Anzeigeeinrichtung derart angezeigt wird, dass eine Spitze eines Fingers der Position des Berührpunkts entspricht,
**dadurch gekennzeichnet, dass**
eine Sitzposition des Bedieners erfasst wird und die Orientierung der Hand und/oder eine Handgröße aus der Sitzposition mit Hilfe eines Modells des Bedieners und/oder einer Tabelle ermittelt wird.

2. Verfahren nach Anspruch 1,
**dadurch gekennzeichnet, dass**
der Bediener durch mindestens einen Sitzbelegungssensor identifiziert wird.

3. Verfahren nach einem der vorhergehenden Ansprüche,
**dadurch gekennzeichnet, dass**
der Bediener durch Schließen eines Stromkreises über die Hand des Bedieners identifiziert wird.

4. Verfahren nach einem der vorhergehenden Ansprüche,
**dadurch gekennzeichnet, dass**
die Bedienfläche in einer Mittelkonsole (2) des Fahrzeugs angeordnet ist und der Bediener durch einen seitlich der Bedienfläche zur Detektion einer Hand und/oder eines Arms (9) eines Bedieners angeordneten Sensor identifiziert wird.

5. Verfahren nach einem der vorhergehenden Ansprüche,
**dadurch gekennzeichnet, dass**
die Sitzposition durch Erfassung der Stellung mindestens eines Verstellelements des Sitzes (7) des Bedieners erfasst wird.

6. Verfahren nach einem der vorhergehenden Ansprüche,
**dadurch gekennzeichnet, dass**
der Berührpunkt auf der Anzeigeeinrichtung angezeigt wird.

7. Verfahren nach einem der vorhergehenden Ansprüche,
**dadurch gekennzeichnet, dass**
die Position des Berührpunkts unter Berücksichtigung der ermittelten Orientierung der Hand ermittelt wird.

8. Vorrichtung zur Anzeige einer Hand eines Bedieners eines Bedienelements eines Fahrzeugs, umfassend ein Bedienelement, das eine Bedienfläche umfasst oder als solche ausgebildet ist, wobei die Bedienfläche zur Detektion einer Berührung durch eine Hand des Bedieners und zur Ermittlung des Berührpunkts ausgebildet ist, weiterhin umfassend erste Sensormittel zur Identifikation eines Bedieners des Bedienelements sowie eine Anzeigeeinrichtung zur lagerichtigen Anzeige eines Bilds einer virtuellen Hand (16, 18) relativ zum Berührpunkt,
**dadurch gekennzeichnet, dass** die Vorrichtung zweite Sensormittel zur Erfassung einer Sitzposition des Bedieners sowie Speicher- und Prozessormittel zur Ermittlung einer Orientierung der Hand aufgrund der Signale der ersten und zweiten Sensormittel umfasst.

## Claims

1. Method for displaying a hand of an operator of an operating element of a vehicle on a display device of the vehicle, contact between an operating area of the operating element and the operator's hand being detected and a position of a point of contact being determined, the operator being identified, an orientation of the hand being determined, and an image of an accordingly oriented virtual hand (16, 18) being displayed on the display device in such a manner that a tip of a finger corresponds to the position of the point of contact,
**characterized in that**
a sitting position of the operator is captured and the orientation of the hand and/or a hand size is/are determined from the sitting position with the aid of a model of the operator and/or a table.

2. Method according to Claim 1,
**characterized in that**
the operator is identified by means of at least one seat occupancy sensor.

3. Method according to one of the preceding claims,
**characterized in that**
the operator is identified by closing a circuit via the operator's hand.

4. Method according to one of the preceding claims,
**characterized in that**
the operating area is arranged in a center console (2) of the vehicle, and the operator is identified by means of a sensor arranged to the side of the operating area for the purpose of detecting an operator's hand and/or arm (9).

5. Method according to one of the preceding claims,
**characterized in that**
the sitting position is captured by capturing the position of at least one adjustment element of the operator's seat (7).

6. Method according to one of the preceding claims,
**characterized in that**
the point of contact is displayed on the display device.

7. Method according to one of the preceding claims,
**characterized in that**
the position of the point of contact is determined taking into account the determined orientation of the hand.

8. Apparatus for displaying a hand of an operator of an operating element of a vehicle, comprising an operating element which comprises an operating area or is in the form of such an operating area, the operating area being designed to detect contact by the operator's hand and to determine the point of contact, also comprising first sensor means for identifying an operator of the operating element and a display device for displaying an image of a virtual hand (16, 18) in the correct position relative to the point of contact,
**characterized in that**
the apparatus comprises second sensor means for capturing a sitting position of the operator and memory and processor means for determining an orientation of the hand on the basis of the signals from the first and second sensor means.

## Revendications

1. Procédé d'affichage d'une main d'un opérateur d'un élément d'opération d'un véhicule sur un dispositif d'affichage du véhicule, un toucher d'une surface d'opération de l'élément d'opération avec la main de l'opérateur étant détecté et une position du point de toucher étant déterminée, l'opérateur étant identifié, une orientation de la main étant déterminée et une image d'une main virtuelle (16, 18) orientée en conséquence étant affichée sur le dispositif d'affichage de telle sorte qu'une pointe d'un doigt correspond à la position du point de toucher,
**caractérisé en ce que**
une position d'assise de l'opérateur est acquise et l'orientation de la main et/ou une taille de la main est déterminée à partir de la position d'assise à l'aide d'un modèle de l'opérateur et/ou d'un tableau.

2. Procédé selon la revendication 1, **caractérisé en ce que** l'opérateur est identifié par au moins un capteur d'occupation de siège.

3. Procédé selon l'une des revendications précédentes, **caractérisé en ce que** l'opérateur est identifié par la fermeture d'un circuit électrique par le biais de la main de l'opérateur.

4. Procédé selon l'une des revendications précédentes, **caractérisé en ce que** la surface d'opération est disposée dans une console centrale (2) du véhicule et l'opérateur est identifié par un capteur disposé latéralement à la surface d'opération et servant à la détection d'une main et/ou d'un bras (9) d'un opérateur.

5. Procédé selon l'une des revendications précédentes, **caractérisé en ce que** la position d'assise est acquise par acquisition de la position d'au moins un élément de positionnement du siège (7) de l'opérateur.

6. Procédé selon l'une des revendications précédentes, **caractérisé en ce que** le point de toucher est affiché sur le dispositif d'affichage.

7. Procédé selon l'une des revendications précédentes, **caractérisé en ce que** la position du point de toucher est déterminée en tenant compte de l'orientation déterminée de la main.

8. Arrangement d'affichage d'une main d'un opérateur d'un élément d'opération d'un véhicule, comprenant un élément d'opération qui comporte une surface d'opération ou qui est réalisé en tant que telle, la surface d'opération étant configurée pour la détection d'un toucher par une main de l'opérateur et pour la détermination du point de toucher, comprenant en outre des premiers moyens de détection destinés à l'identification d'un opérateur de l'élément d'opération ainsi qu'un dispositif d'affichage destiné à afficher dans la position correcte une image d'une main virtuelle (16, 18) par rapport au point de toucher,
**caractérisé en ce que**
l'arrangement comprend des deuxièmes moyens de détection servant à l'acquisition d'une position d'assise de l'opérateur ainsi que des moyens de mémorisation et de traitement servant à la détermination d'une orientation de la main sur la base des signaux des premiers et des deuxièmes moyens de détection.
